# EUROPÄISCHE PATENTSCHRIFT

(11) **EP 0 841 492 B1**
(45) Veröffentlichungstag und Bekanntmachung des Hinweises auf die Patenterteilung: **19.09.2001**
(21) Anmeldenummer: 97118883.4
(22) Anmeldetag: 30.10.1997
(51) Int. Cl.: F16B 37/04

(54) **Verbindungseinrichtung**
Connecting device.
Dispositif de connection.

(30) Priorität: 11.11.1996 EP 96810764
(43) Veröffentlichungstag der Anmeldung: 13.05.1998
(73) Patentinhaber: INVENTIO AG, CH-6052 Hergiswil (CH)
(72) Erfinder: Liebetrau, Christoph, 5737 Menziken (CH); Schindler, Kaspar, 5726 Unterkulm (CH)

(56) Entgegenhaltungen:
- EP-A- 0 671 566
- DE-U- 9 115 943
- FR-A- 1 372 425

## Beschreibung

Die vorliegende Erfindung betrifft eine Verbindungseinrichtung mittels Verbindungselemente für die Herstellung einer festen, lösbaren und reproduzierbaren mechanischen Verbindung von zwei Profilenden untereinander, im wesentlichen bestehend aus einer Nutleiste mit Gewindelöcher, einer gelochten Lasche und Schrauben, wobei die zu verbindenden Profilenden Montagenuten für die Aufnahme von Nutleisten aufweisen, ZB aus der EP-A-0671566 bekannt.

Verbindungsmittel und Verbindungstechnik der vorgenannten Art sind allgemein bekannt und erfüllen in vielfälitigen Varianten die Bedürfnisse einer normal beanspruchten mechanischen Verbindung. Die nötige Haltekraft einer solchen normalerweise auf Zug belasteten Verbindung wird reibschlüssig mittels Schrauben hergestellt, welche durch festes Anziehen von mindestens je einer Schraube an jedem Profilende erreicht wird. Die Reibkraft, und somit die Haltekraft der Verbindung, kann bis zu einer gewissen Grenzen mittels Anzahl und Dimension der Schrauben und der Materialpaarung beeinflusst werden. Bei starker dynamischer Beanspruchung wird der Aufwand für eine nur auf Reibschluss basierenden Verbindung zu hoch oder aus technischen Gründen, beispielsweise grosser Platzbedarf, gar unmöglich.

Für die Herstellung von formschlüssigen Verbindungen bietet sich die ebenfalls bekannte Technik mit gelochten Laschen, Durchgangslöchern an den zu verbindenden Teilen zusammen mit durchgehenden Schrauben, Nieten oder Bolzen an. Bei dieser Verbindungsart müssen jedoch die zu verbindenden Teile mit Durchgangslöchern versehen werden, was pro Profilende einen entsprechenden Aufwand erfordert.

Hier will nun die Erfindung eine neue Lösung aufzeigen und es wird hiermit die Aufgabe gestellt, eine Verbindungseinrichtung zu schaffen, welche die vorgenannte Nachteile nicht aufweist und ohne nennenswerten Mehraufwand eine dauerhafte rüttelfeste mechanische Verbindung ermöglicht.

Diese Aufgabe wird durch die im Anspruch 1 gekennzeichnete und beispielhaft in Beschreibung und Zeichnung dargestellte Erfindung gelöst.

Die Erfindung zeichnet u.a. dadurch aus, dass sich beim Festziehen der Verbindungsschrauben ein Teil der Verbindungslasche in die Oberfläche der zu verbindenden Teile kaltverformend eindringt und hiermit an mindestens einer Stelle eine zusätzliche Formschlussverbindung herstellt.

Vorteilhafte Weiterbildungen und Verbesserungen sind in den Unteranspüchen aufgeführt.

Die in die Oberfläche eindringenden Teile der Verbindungslasche sind als von der Oberfläche der Verbindungslasche vorstehende Eindringelemente in der Form von spitz vorstehenden, Zug- und Druckrichtung widerstehenden, Raspelhieben ausgebildet.

Das Material der gelochten Lasche weist eine etwa doppelte Härte des Materials der zu verbindenden Teile auf.

Die Anordnung der Raspelhiebe und Löcher erlaubt eine zweite Verbindungsoperation mit den gleichen Teilen und mit einer gleichen Formschluss-Prägung wie beim ersten Mal.

Die Nutleiste weist überhöhte Seitenkanten auf.

Die vorstehenden Eindringelemente sind auf einer Linie beidseitig der Löcher in der Lasche angeordnet die sich deckt mit der überhöhten Seitenkante der Nutleiste.

Die Erfindung wird im folgenden anhand eines Ausführungsbeispiels näher erläutert und in den Zeichnungen dargestellt, es zeigen
Fig.1 die Unterseite einer gelochten Lasche mit der Anordnung der Löcher und vorstehenden Eindringstellen,
Fig.2 einen Querschnitt der gelochten Lasche auf einer Lochmittellinie,
Fig.3 eine vergrösserte, räumliche Darstellung einer vorstehenden Eindringstelle,
Fig.4 einen Querschnitt durch eine ausgeführte Verbindung,
Fig.5 eine Draufsicht auf eine ausgeführte Verbindung,
Fig.6 eine Draufsicht auf die Nutleiste,
Fig.7 ein Querschnitt durch die Nutleiste und
Fig.8 eine zu den Lochmittellinie verschobene Anordnung der vorstehenden Eindringstellen.

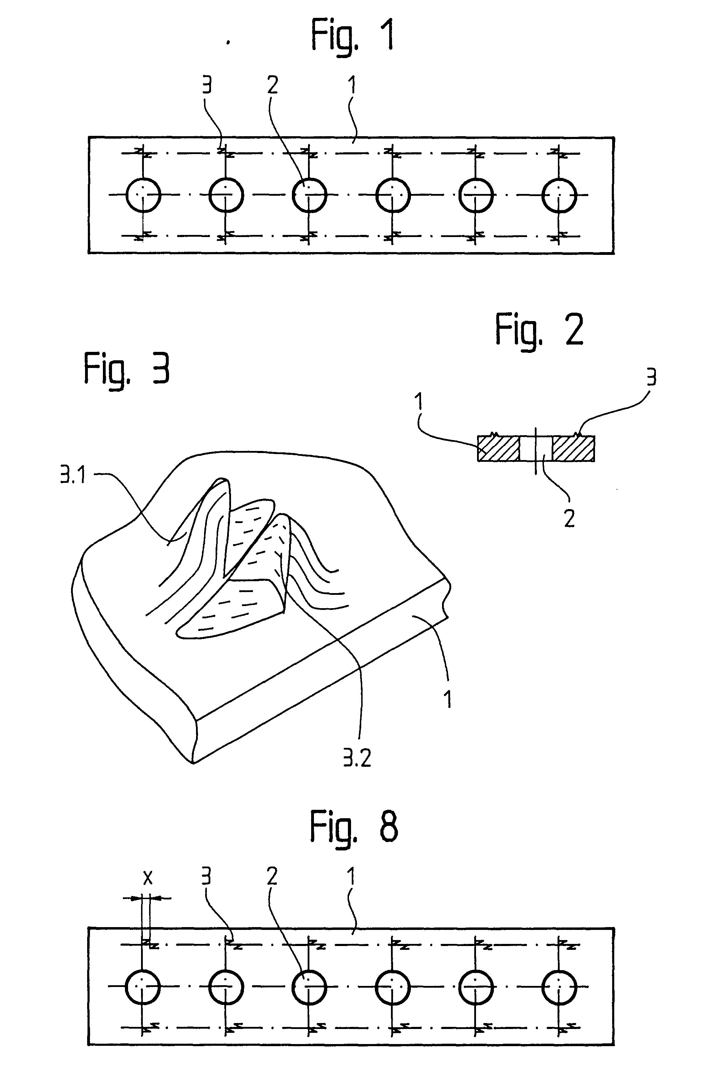

In der Fig.1 ist mit 1 eine gelochte Lasche dargestellt. Auf einer Längsreihe mittig angeordnet sind eine gerade Anzahl Durchgangslöcher 2 vorhanden. Ebenfalls je auf einer Längsreihe sind beidseits der Durchgangslöcher 2 auf der Höhe der Lochmittellinien neben den Durchgangslöchern vorstehende Eindringelemente 3 angeordnet.

In der Fig.2 sind im Querschnitt durch ein Durchgangsloch 2 der gelochten Lasche 1 die Eindringelemente 3 als von der Oberfläche vorstehende Doppelspitzen erkennbar.

Die Fig.3 zeigt die vergrösserte Darstellung eines Eindringelementes 3 und dessen praktische Ausführung in der Form von einander entgegengesetzt angebrachten Raspelhieben 3.1 und 3.2. Das aufgestossene Material der gelochten Lasche 1 bildet scharfkantige, löffelförmige Krallen mit einer steilen, etwas hohlen Seite auf der Aufstoss-Seite und einer schrägen Flanke auf der Rückseite der Raspelhiebe 3.1, bzw. 3.2.

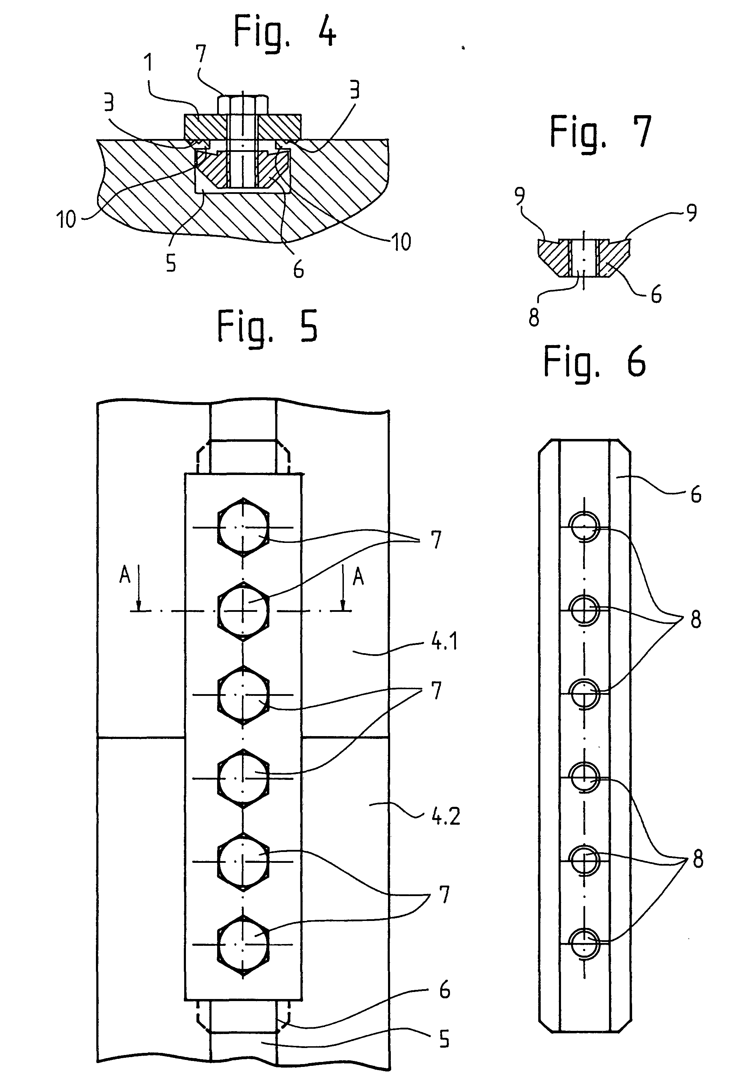

Die Fig.4 zeigt im Querschnitt eine ausgeführte erfindungsgemässe Verbindung. Im Profil 4 ist eine normale rechteckige Montagenut 5 ausgespart mit zur Mitte vorstehenden horizontalen, mit der Profiloberfläche bündigen Seitenrändern 9. Es ist ferner bei dieser Darstellung sichtbar, wie die Eindringelemente 3 in das Profilmaterial der Seitenränder 10 eindringen. Ferner ist in der Montagenut 5 eine Nutleiste 6 vorhanden, sowie eine Schraube 7, mittels welcher die Nutleiste 6 und die gelochte Lasche 1 zusammengezogen werden.

Die Fig.5 zeigt die Draufsicht auf eine Verbindung der erfindungsgemässen Art von einem oberen Profilendes 4.1 mit einem unteren Profilende 4.2. Es sind bei dieser Ansicht von aussen keine Merkmale der Erfindung sichtbar, was ein neutrales Bild einer scheinbar normalen Laschenverbindung ergibt.

Die Nutleiste 6 gemäss Fig.6 weist eine auf einer Längsreihe angeordnete, mit den Löchern 2 der gelochten Lasche übereinstimmende Anzahl Gewindelöcher 8 auf.

Im Profilquerschnitt der Nutleiste 6 in der Fig.7 sind die oberen Seitenkonturen so ausgebildet, dass sich eine linienförmige Auflagekante 9 ergibt.

Die Fig.8 zeigt eine alternative Anordnung der vorstehenden Eindringelemente 3 in Bezug auf die Löcher 2 der gelochten Lasche 1. Hierbei sind die Eindringelemente 3 in Bezug auf die Mittellinien der Löcher 2 um einen Betrag x in Längsrichtung nach rechts oder nach links verschoben. Diese Anordnung der seitlich verschobenen Eindringelemente 3 ermöglicht, wie später beschrieben, eine zweite, zur ersten Ausführung qualitativ gleichwertige Verbindungsausführung.

Die Handhabung der erfindungsgemässen Verbindungseinrichtung unterscheidet sich nicht von der Art mit den üblichen Verbindungselementen Nutleiste, gelochte Lasche und Schrauben 7. Der Unterschied besteht, wie aus den Figurenbeschreibungen ersichtlich in der speziellen Ausbildung der gelochten Lasche 1 und der Nutleiste 6. Eine Verbindung wird hergestellt durch Einschieben der Nutleiste 6 in die Montagenut 5, Zusammenschieben der Profilenden 4.1, 4.2, Auflegen der gelochten Lasche 1 mit nach der Auflagefläche gerichteten Eindringelementen 3, Einsetzen und lose Einschrauben der Schrauben 7 und anschliessendem abwechslungsweisen Festziehen der Schrauben 7. Vor dem Festziehen der Schrauben 7 besteht eine Luftspalt zwischen der Auflagefläche des Profils 4 und der Unterseite der gelochten Lasche 1. Beim kontinuierlichen und abwechslungsweisen Festziehen der Schrauben 7 verringert sich dieser Lufspalt zukzessive. Es entsteht ein mit der Eindringtiefe der Eindringelemente 3 zunehmendes Anzugsdrehmoment. Das vermittelt ein Gefühl der kaltverformenden Eindringung der Eindringelemente 3 in das Profilmaterial, welches sich auf die Handhabung des Schraubenschlüssels überträgt. Wenn die gelochte Lasche 1 rundum fugenlos auf der Profiloberfläche aufliegt, ist der Festziehvorgang abgeschlossen, was sich mit einer markanten Zunahme des nötigen Schraubendrehmomentes bemerkbar macht. Das fugenlose Anligen der gelochten Lasche auf der Profilunterlage ermöglicht gleichzeitig eine einfache optische Kontrolle der Verbindungseinrichtung, bzw. lässt auf einen Blick erkennen, ob die Schrauben 7 festgezogen sind oder nicht.

Die Festigkeit der des Materials der gelochten Lasche 1 sollte etwa den doppelten Wert des Materials der zu verbindenden Teile aufweisen. Besteht das Material des Profils 4 beispielsweise aus Aluminium, genügt es, für die gelochte Lasche 1 einen mittelfesten Stahl zu verwenden. Bei härteren Profilmaterialien kann die Festigkeit der Eindringelemente 3 beispielsweise durch Einsatzhärtung auf die nötige Härte gebracht werden.

Damit das Eindringen der Eindringelemente 3 in das Profil 4 gut abgestützt ist auf der Unterseite des vorstehenden Seitenrandes 10 der Montagenut 5 im Profil 4, sind die Eindringelemente 3 auf der gelochten Lasche 1 auf einer Linie angeordnet, welche sich deckt mit der Auflagekante 9 der Nutleiste 6. Das ergibt den vorteilhaften Effekt, dass nur gezielt an den Eindringstellen eine lokale Verformung durch Kaltfliessen stattfindet ohne weitere Deformierung des Profilmaterials.

Eine Verbindung der beschriebenen Art kann leicht wieder gelöst werden, wobei im Material des Profil 4 nach der Entfernung der gelochten Lasche 1 die von der Verbindungsoperation herrührenden Prägemarken sichtbar werden. Für eine zweite Verbindung kann die gelochte Lasche 1 wieder verwendet und auf gleiche Art wieder aufgesetzt werden. Hierbei dringen die Eindringelemente 3 ohne Verformungsarbeit wieder in die Prägemarken der vormaligen Verbindungsoperation ein. Die erneute Verbindung ist qualitativ annähernd gleichwertig mit der erstmalig vollzogenen. Wird jedoch gewünscht, dass sich der Eindringvorgang bei einer zweiten Verbindungsoperation wie beim ersten Mal wiederholt, kann generell eine gelochte Lasche gemäss Fig.8 verwendet werden. Hierbei die gelochte Lasche 1, mit den zu den Lochmittellinien um den Betrag x verschobenen Anordnung der Eindringelemente 3, vor dem Auflegen auf das Profil 4 gegenüber der Position bei der erstmaligen Verbindung um 180° um die Hochachse gedreht und dann, wie bereits beschrieben, wieder festgeschraubt. Die Eindringelemente 3 haben nun eine gegenüber der erstmaligen Verbindungsoperation verschobene Lage und bewirken ein erneutes kaltverformendes Eindringen, an neuen noch nicht verformten Stellen, in das Profilmaterial.

Die Herstellung der Eindringelemente 3 erfolgt auf die gleiche Art wie die Herstellung von Feilen mit grobem Raspelhieb. Es werden hierfür keine neuen Vorrichtungen und Werkzeuge benötigt. Der Vorgang kann automatisiert werden durch entsprechende Programmierung der hierzu verwendeten Werkzeugmaschine.

Form, Anzahl und Anordnung der Raspelhiebe kann, unterschiedlichen Bedürfnissen entsprechend, variiert werden und beschränkt sich nicht auf das gezeigte Beispiel.

### Verbindungseinrichtung

### Bezugszeichenliste

- 1: gelochte Lasche
- 2: Loch
- 3: Eindringelement
- 3.1: Raspelhieb, eine Richtung
- 3.2: Raspelhieb, andere Richtung
- 4.: Profil
- 4.1: oberes Profilende
- 4.2: unteres Profilende
- 5: Montagenut
- 6: Nutleiste
- 7: Schraube
- 8: Gewindeloch
- 9: Auflagekante
- 10: Seitenrand

## Patentansprüche

1. Verbindungseinrichtung mittels Verbindungselemente für die Herstellung einer festen, lösbaren und reproduzierbaren mechanischen Verbindung von zwei Profilenden (4.1/4.2) untereinander, im wesentlichen bestehend aus einer Nutleiste (6) mit Gewindelöchern (8), einer Lasche mit Löchern (2) und Schrauben (7), wobei die zu verbindenden Profilenden (4.1/4.2) Montagenuten (5) für die Aufnahme der Nutleisten (6) aufweisen, **dadurch gekennzeichnet, dass** eine gelochte Lasche (1) an der aufliegenden Seite eine Anzahl von der Oberfläche vorstehende Eindringelemente (3) aufweist, die beim Verbindungsvorgang in das Material der zu verbindenden Profilenden (4.1/4.2) kaltverformend eindringen.

2. Verbindungseinrichtung nach Anspruch 1, **dadurch gekennzeichnet, dass** die von der Oberfläche vorstehenden Eindringelemente (3) als Raspelhiebe ausgebildet und vorzugsweise paarweise mit zueinander entgegengesetzter Richtung angeordnet sind.

3. Verbindungseinrichtung nach Anspruch 1, **dadurch gekennzeichnet, dass** das Material der gelochten Lasche (1) mindestens die doppelte Härte des Materials der zu verbindenden Profilenden (4.1/4.2) aufweist.

4. Verbindungseinrichtung nach Anspruch 1, **dadurch gekennzeichnet, dass** die Eindringelemente (3) eine Anordnung aufweisen, welche bei einer Drehung der gelochten Lasche (1) um 180° um die Hochachse eine zweite Verbindungsoperation mit neuen Einprägungen der Eindringelemente (3) in das Material der Profilenden (4.1/4.2) ermöglichen.

5. Verbindungseinrichtung nach Anspruch 1, **dadurch gekennzeichnet, dass** die Nutleiste (6) linienförmige Auflagekanten (9) aufweist, welche in der Montagenut (5) unter einem vorstehenden Seitenrand (10) anliegen.

6. Verbindungseinrichtung nach Anspruch 1, **dadurch gekennzeichnet, dass** die Eindringelemente (3) der gelochten Lasche (1) auf einer Linie liegen, die sich mit der Auflagelinie der Auflagekante (9) der Nutleiste (6) deckt.

## Claims

1. Connecting device by means of connecting elements for the production of a firm, releasable and reproducible mechanical interconnection of two profile member ends (4.1/4.2), substantially consisting of a groove strip (6) with threaded holes (8), a strap with holes (2) and screws (7), wherein the profile member ends (4.1/4.2) to be connected have mounting grooves (5) for the reception of the groove strips (6), **characterised in that** an apertured strap (1) has at the supporting side a number of penetration elements (3) which project from the surface and which during the connecting process penetrate in colddeforming manner into the material of the profile member ends (4.1/4.2) to be connected.

2. Connecting device according to claim 1, **characterised in that** the penetration elements (3) projecting from the surface are formed as grater gashes and are preferably arranged in pairs with mutually opposite direction.

3. Connecting device according to claim 1, **characterised in that** the material of the apertured strap (1) has at least twice the hardness of the material of the profile member ends (4.1/4.2) to be connected.

4. Connecting device according to claim 1, **characterised in that** the penetration elements (2) have an arrangement which, on a rotation of the apertured strap (1) through 180° about the vertical axis of plane, enables a second connecting operation with new impressing of the penetration elements (3) into the material of the profile member ends (4.1/4.2).

5. Connecting device according to claim 1, **characterised in that** the groove strip (6) has linear support edges (9) which fit in the mounting groove (5) under a projecting side edge (10).

6. Connecting device according to claim 1, **characterised in that** the penetration elements (3) of the apertured strap (1) lie on a line which coincides with the support line of the support edge (9) of the groove strip (6).

## Revendications

1. Dispositif de liaison à l'aide d'éléments de liaison pour réaliser une liaison mécanique solide, amovible et reproductible entre deux extrémités de profilés (4.1/4.2), comprenant essentiellement une baguette pour rainure (6) pourvue de trous filetés (8), une attache pourvue de trous (2) et des vis (7), les extrémités de profilés à relier (4.1/4.2) présentant des rainures de montage (5) destinées à recevoir les baguettes pour rainure (6), **caractérisé en ce qu'**une attache perforée (1) présente, sur son côté d'appui, un certain nombre d'éléments de pénétration (3) qui dépassent de la surface et qui, lors de l'opération de liaison, pénètrent avec une déformation à froid dans le matériau des extrémités de profilés (4.1/4.2).

2. Dispositif de liaison selon la revendication 1, **caractérisé en ce que** les éléments de pénétration (3) qui dépassent de la surface sont conçus comme des coups de lime et sont disposés de préférence par paires dans des sens opposés.

3. Dispositif de liaison selon la revendication 1, **caractérisé en ce que** le matériau de l'attache perforée (1) présente une dureté au moins deux fois plus grande que celle du matériau des extrémités de profilés à relier (4.1/4.2).

4. Dispositif de liaison selon la revendication 1, **caractérisé en ce que** les éléments de pénétration (3) présentent une disposition qui permet, moyennant une rotation de l'attache perforée (1) de 180° autour de l'axe normal, une deuxième opération de liaison avec un nouvel enfoncement des éléments de pénétration (3) dans le matériau des extrémités de profilés (4.1/4.2).

5. Dispositif de liaison selon la revendication 1, **caractérisé en ce que** la baguette pour rainure (6) présente des bords d'appui linéaires (9) qui sont appliqués, dans la rainure de montage (5), sous des bords latéraux saillants (10).

6. Dispositif de liaison selon la revendication 1, **caractérisé en ce que** les éléments de pénétration (3) de l'attache perforée (1) sont situés sur une ligne qui coïncide avec la ligne d'appui du bord d'appui (9) de la baguette pour rainure (6).
